# FASCICULE DE BREVET EUROPEEN

(11) **EP 1 600 733 B1**
(45) Date de publication et mention de la délivrance du brevet: **21.02.2007**
(21) Numéro de dépôt: 05290744.1
(22) Date de dépôt: 05.04.2005
(51) Int. Cl.: G01C 21/20, G05D 1/02

(54) **Procédé et dispositif pour fournir une trajectoire de vol à un aéronef**
Verfahren und Vorrichtung zur Bereitstellung einer Flugbahn für ein Flugzeug
Method and apparatus to provide a flight path to an aircraft

(30) Priorité: 18.05.2004 FR 0405377
(43) Date de publication de la demande: 30.11.2005
(73) Titulaire: AIRBUS France, 31060 Toulouse (FR)
(72) Inventeur: Berard, Jérémy, 31150 Fenouillet (FR)
(74) Mandataire: Hauer, Bernard

(56) Documents cités:
- WO-A-20/04029551
- GB-A- 1 375 181
- US-A- 5 406 491

## Description

La présente invention concerne un procédé et un dispositif pour fournir une trajectoire de vol à un aéronef, en particulier à un avion de transport militaire, ainsi qu'un système de guidage automatique comportant un tel dispositif.

Le document US 5406491 montre un système de navigation qui présente à l'utilisateur des trajectoires alternatives à la trajectoire active en cours.

Selon l'invention, le procédé est remarquable en ce que :
a) on définit une trajectoire principale, qui est suivie par l'aéronef, et au moins une trajectoire optionnelle qui s'écarte de ladite trajectoire principale, qui présente au moins un point commun avec ladite trajectoire principale et qui est susceptible d'être suivie par l'aéronef si elle est activée ;
b) on détermine automatiquement un point de décision qui indique la dernière position de l'aéronef le long de ladite trajectoire principale, où ladite trajectoire optionnelle peut encore être activée afin de permettre à l'aéronef de la suivre ;
c) on présente automatiquement ledit point de décision à un pilote de l'aéronef ; et
d) le pilote peut, au moins en fonction de cette présentation, activer ladite trajectoire optionnelle.

Ainsi, grâce à l'invention, le pilote de l'aéronef connaît le dernier point (point de décision), où il peut encore activer ladite trajectoire optionnelle pour permettre à l'aéronef de la suivre. Jusqu'audit point de décision, deux alternatives se présentent donc au pilote, lui permettant :
- soit de continuer à suivre la trajectoire principale initiale, ce qui ne nécessite aucune action (ou activation) particulière de sa part ;
- soit d'activer ladite trajectoire optionnelle, pour suivre cette dernière.

Selon l'invention, pour déterminer ledit point de décision :
- à partir dudit point commun, successivement, pour chaque point suivant de ladite trajectoire principale, dans le sens de vol de l'aéronef, on vérifie si ce point appartient également à ladite trajectoire optionnelle ; et
- dès qu'un point n'appartient plus à ladite trajectoire optionnelle, on prend en compte le point précédent qui appartenait encore à ladite trajectoire optionnelle et on considère ce point précédent comme point de décision.

On notera que la présente invention s'applique à tout type de trajectoire de vol (en ce qui concerne les trajectoires principale optionnelle). En particulier, elle s'applique :
- à une trajectoire de vol à deux dimensions. Dans ce cas, avantageusement, on vérifie dans un plan latéral, si un point de la trajectoire principale appartient également à la trajectoire optionnelle, pour mettre en oeuvre le mode de réalisation préféré précité ; et
- à une trajectoire de vol à trois dimensions. Dans ce cas, avantageusement, on vérifie dans tout l'espace, si un point de la trajectoire principale appartient également à la trajectoire optionnelle, pour mettre en oeuvre le mode de réalisation préféré précité.

Dans un mode de réalisation particulier, si à l'étape d) le pilote active ladite trajectoire optionnelle qui devient alors la nouvelle trajectoire suivie par l'aéronef, on transforme la trajectoire principale initialement suivie par l'aéronef en nouvelle trajectoire optionnelle.

Ainsi, le pilote peut intervertir au choix la route principale et la route optionnelle, et ceci à tout moment jusqu'audit point de décision. Cela permet notamment de revenir en arrière après une activation faite par erreur. Bien entendu, au-delà dudit point de décision, seule la trajectoire de vol choisie, parmi lesdites trajectoires principale et optionnelle, est conservée.

La présente invention concerne également un dispositif pour fournir une trajectoire de vol à un aéronef.

Selon l'invention, ledit dispositif est remarquable en ce qu'il comporte :
- des premiers moyens pour définir une trajectoire principale, qui est suivie par l'aéronef, et une trajectoire optionnelle qui s'écarte de ladite trajectoire principale qui présente au moins un point commun avec ladite trajectoire principale et qui est susceptible d'être suivie par l'aéronef si elle est activée ;
- des deuxièmes moyens pour déterminer automatiquement un point de décision qui indique la dernière position de l'aéronef le long de ladite trajectoire principale, où ladite trajectoire optionnelle peut encore être activée afin de permettre à l'aéronef de la suivre ;
- des troisièmes moyens pour présenter automatiquement ledit point de décision à un pilote de l'aéronef ; et
- des quatrièmes moyens actionnables, permettant à un pilote d'activer ladite trajectoire optionnelle.

De plus, avantageusement, lesdits troisièmes moyens peuvent comporter un écran de visualisation tête haute et/ou un écran de visualisation tête basse.

En outre, dans un mode de réalisation préféré, lesdits quatrièmes moyens comportent des moyens de commande interactifs. Ce mode de réalisation préféré permet une activation simplifiée et utilise des moyens de commande interactifs modernes, qui sont très performants.

La présente invention concerne également un système de guidage automatique d'un aéronef, du type comportant :
- un ensemble de sources d'informations ;
- une source d'informations auxiliaire susceptible de fournir une trajectoire de vol ;
- une unité centrale pour déterminer automatiquement des ordres de pilotage de l'aéronef, à l'aide d'informations reçues dudit ensemble de sources d'informations et d'une trajectoire de vol fournie par ladite source d'informations auxiliaire ; et
- des moyens d'actionnement d'organes commandés de l'aéronef, auxquels sont appliqués automatiquement les ordres de pilotage déterminés par ladite unité centrale.

Selon l'invention, ledit système de guidage automatique est remarquable en ce que ladite source d'informations auxiliaire comporte un dispositif du type précité, pour fournir une trajectoire de vol à l'aéronef.

Les figures du dessin annexé feront bien comprendre comment l'invention peut être réalisée. Sur ces figures, des références identiques désignent des éléments semblables.
La figure 1 est le schéma synoptique d'un dispositif conforme à l'invention.
La figure 2 montre schématiquement un affichage conforme à un premier mode de réalisation.
La figure 3 illustre un graphique relatif à un second mode de réalisation.
La figure 4 montre schématiquement un affichage conforme au second mode de réalisation de la figure 3.
La figure 5 est le schéma synoptique d'un système de guidage conforme à l'invention.

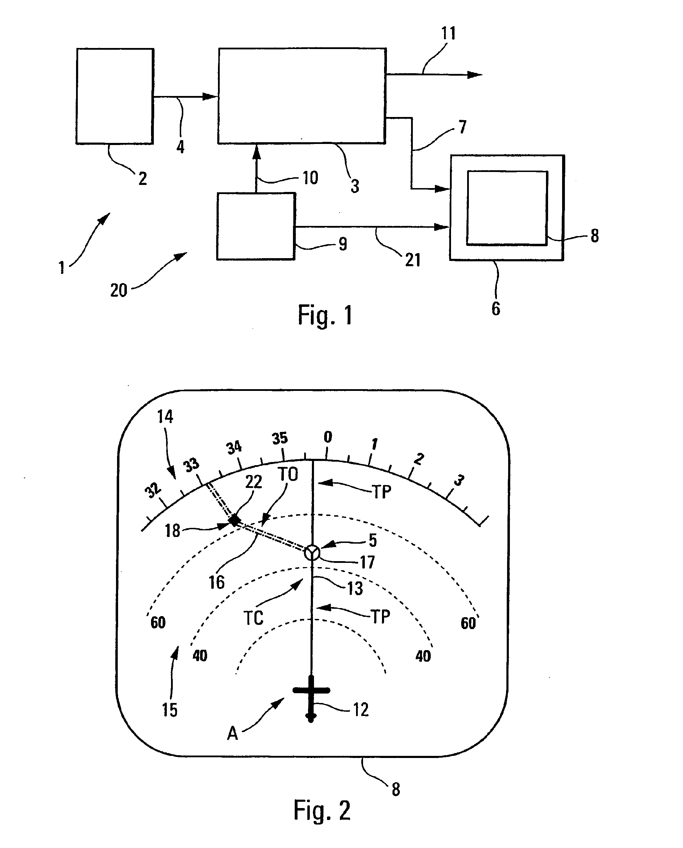

Le dispositif 1 conforme à l'invention et représenté schématiquement sur la figure 1, est destiné à fournir une trajectoire de vol à un aéronef A, en particulier un avion de transport militaire.

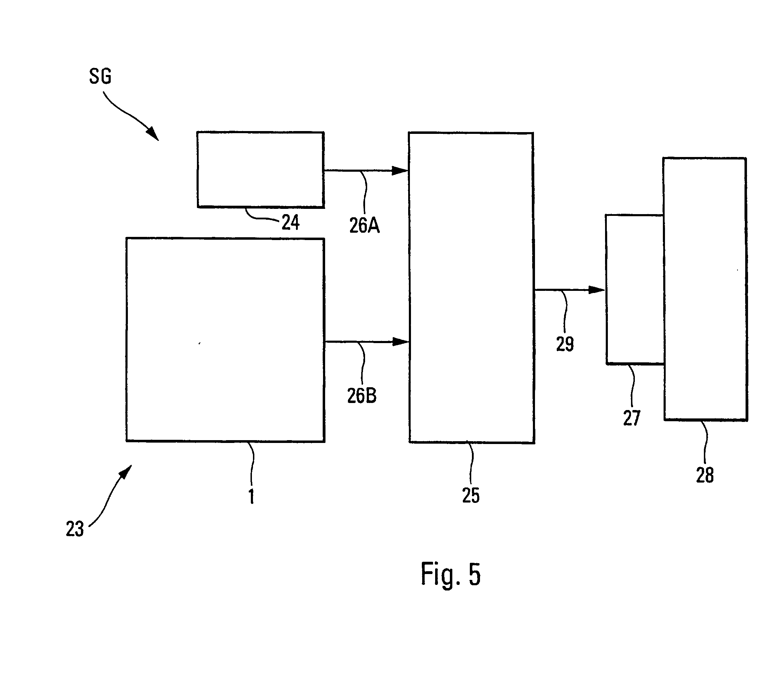

Selon l'invention, ledit dispositif 1 qui est embarqué sur l'aéronef A, comporte :
- des moyens 2 usuels, pour définir une trajectoire principale TP qui est suivie par l'aéronef A, comme précisé par exemple ci-dessous en référence à la figure 5, et une trajectoire optionnelle TO qui présente au moins un point commun (et généralement tout un tronçon commun TC) avec ladite trajectoire principale TP et qui est susceptible d'être suivie par l'aéronef A si elle est activée ;
- des moyens 3 qui sont reliés par une liaison 4 auxdits moyens 2 et qui sont susceptibles de déterminer automatiquement un point de décision 5 qui indique la dernière position de l'aéronef A le long de ladite trajectoire TP qu'il suit, où ladite trajectoire optionnelle TO peut encore être activée (comme précisé ci-dessous) afin de permettre à l'aéronef A de suivre alors cette trajectoire optionnelle TO (au lieu de suivre ladite trajectoire principale TP) ;
- des moyens d'affichage 6 qui sont reliés par une liaison 7 auxdits moyens 3 et qui sont susceptibles de présenter automatiquement ledit point de décision 5 sur un écran de visualisation 8 précisé ci-dessous, à un pilote de l'aéronef A ; et
- des moyens 9 usuels, qui sont reliés par une liaison 10 auxdits moyens 3, qui sont actionnables et qui permettent à un pilote d'activer ladite trajectoire optionnelle TO. A la suite d'une telle activation, l'aéronef A prend en compte de façon usuelle ladite trajectoire optionnelle TO (à la place de la trajectoire principale TP), notamment pour son guidage et/ou pour des calculs de prédictions (temps de passage, carburant disponible, vitesse, ...).

Lesdits moyens 3 peuvent également fournir ledit point de décision 5 à d'autres dispositifs utilisateurs non représentés, par exemple par l'intermédiaire d'une liaison 11.

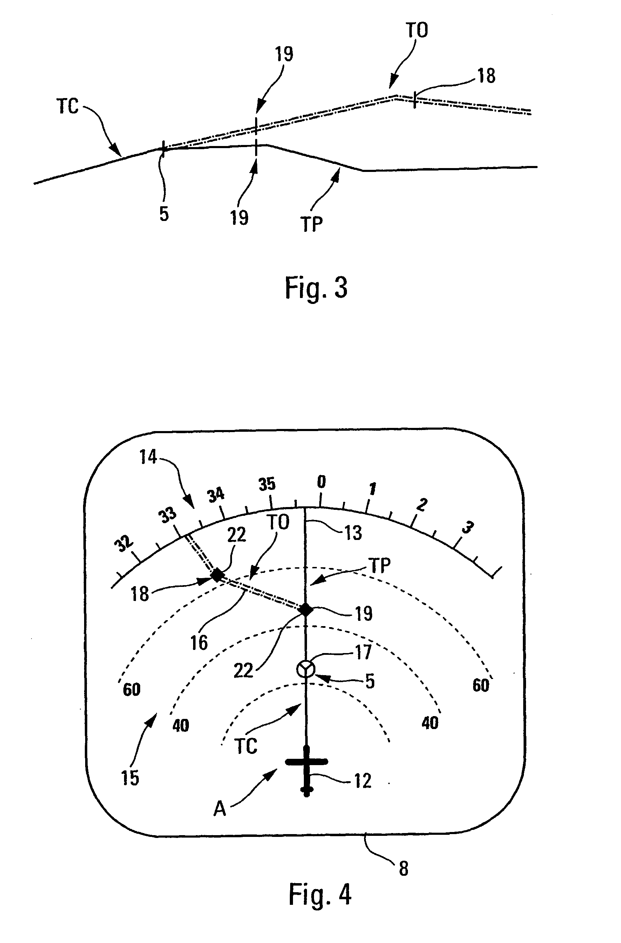

En outre, selon l'invention, ledit écran de visualisation 8 peut être un écran tête haute, par exemple de type HUD ("Head Up Display" en anglais), ou un écran de navigation, par exemple de type ND ("Navigation Display" en anglais), comme représenté sur les figures 2 et 4.

Un tel écran de navigation ND illustre la situation de l'aéronef A (plan de vol latéral) dans un plan horizontal et comporte :
- un symbole 12 illustrant la position actuelle de l'aéronef A ;
- un tracé 13 montrant la trajectoire principale TP dans le plan horizontal, c'est-à-dire la route principale qui est suivie par l'aéronef A ;
- une graduation usuelle 14 en écart angulaire ; et
- une graduation usuelle 15 en distance.

Selon l'invention, lesdits moyens d'affichage 6 affichent, de plus, sur cet écran de navigation ND :
- un tracé 16 montrant la trajectoire optionnelle TO ; et
- un symbole caractéristique 17 illustrant la position dudit point de décision 5.

Ainsi, grâce au dispositif 1 conforme à l'invention, le pilote de l'aéronef A connaît le point ultime (point de décision 5 qui est localisé par le symbole caractéristique 17 sur l'écran de visualisation 8), où il peut encore activer ladite trajectoire optionnelle TO pour permettre à l'aéronef A de la suivre. Jusqu'audit point de décision 5, deux alternatives se présentent donc au pilote. Il peut en effet :
- soit continuer à suivre la trajectoire principale TP, en ne réalisant aucune action spécifique à cet effet ;
- soit faire suivre à l'aéronef A ladite trajectoire optionnelle TO, en activant cette trajectoire optionnelle TO à l'aide desdits moyens 9.

Dans un mode de réalisation particulier, si le pilote active ladite trajectoire optionnelle TO qui devient alors la nouvelle trajectoire suivie par l'aéronef A, il peut de plus transformer (par exemple également à l'aide desdits moyens 9) la trajectoire principale TP initialement suivie par l'aéronef A en nouvelle trajectoire optionnelle.

Ainsi, le pilote peut intervertir (au choix) la route principale TP et la route optionnelle TO, et ceci à tout moment jusqu'audit point de décision 5. Cela permet notamment de revenir en arrière après une activation faite par erreur. Bien entendu, au-delà dudit point de décision 5, seule la trajectoire de vol choisie, parmi la trajectoire principale TP et la trajectoire optionnelle TO, est conservée.

Comme on peut le voir sur les figures 2 et 4, le point de décision 5 correspond au point de divergence des deux trajectoires TP et TO qui ont en commun tout le tronçon TC qui va de l'origine jusqu'audit point de décision 5.

Pour déterminer ledit point de décision 5, lesdits moyens 2 réalisent les opérations suivantes :
- à partir dudit point commun (en l'occurrence le point d'origine du vol ou, si l'aéronef A a déjà commencé son vol, le point relatif à la position actuelle de l'aéronef A, illustrée par le symbole 12), successivement, pour chaque point (par exemple chaque point de route) suivant de ladite trajectoire principale TP, dans le sens de vol de l'aéronef A, ils vérifient si ce point appartient également à ladite trajectoire optionnelle TO ; et
- dès qu'un point n'appartient plus à ladite trajectoire optionnelle TO, ils prennent en compte le point précédent qui appartenait encore à ladite trajectoire optionnelle TO et ils considèrent ce point précédent comme point de décision 5.

Cette situation est représentée pour une trajectoire à deux dimensions sur la figure 2, sur laquelle on a de plus représenté un point de route particulier 18 (illustré par un symbole 22) sur la trajectoire optionnelle TO.

On sait que, lorsque les deux trajectoires de vol (trajectoire principale TP et trajectoire optionnelle TO) sont des trajectoires à trois dimensions, il peut arriver que ces deux trajectoires TO et TP divergent dans le plan vertical, comme représenté sur la figure 3, avant de diverger dans le plan latéral, comme illustré sur l'écran de navigation 8 correspondant représenté sur la figure 4. Cet exemple est basé sur la trajectoire à deux dimensions présentée sur la figure 2.

La figure 3 illustre les profils verticaux des deux trajectoires TO et TP, à savoir la superposition des coupes verticales le long des deux routes correspondantes. Les deux routes passent par un point 19 (correspondant au point de décision 5 de l'exemple à deux dimensions de la figure 2) dans le plan latéral, mais à des altitudes différentes. Dans cet exemple, le point de décision 5 correspond au point de divergence dans le plan vertical qui est situé en amont du point 19 (dans le sens de vol), comme représenté sur la figure 4. Ce point 19 est également illustré par un symbole 22 sur l'écran de visualisation 8.

Dans cet exemple à trois dimensions, les moyens 2 déterminent le point de décision 5 en mettant en oeuvre un procédé similaire à celui précité pour une trajectoire à deux dimensions.

Bien entendu, on peut également présenter les trajectoires TO et TP, ainsi que le point de décision 5 du dernier exemple, sur un écran de visualisation usuel montrant des trajectoires en trois dimensions.

Par ailleurs, dans un mode de réalisation particulier, lesdits moyens d'actionnement 9 font partie d'un ensemble de commande 20 comportant un écran de visualisation interactif. Il peut s'agir d'un écran spécifique ou de l'écran de visualisation 8, les moyens d'affichage 6 étant alors reliés par une liaison 21 auxdits moyens 9, comme représenté sur la figure 1.

Un tel écran 8 interactif est par exemple du type connu à cristaux liquides LCD ("Liquid Crystal Display" en anglais). Un tel écran interactif comporte des objets (plages, valeurs alphanumériques, ...) qui sont sensibles à la présence d'un curseur. Les moyens 9 comprennent alors des moyens de commande de curseur (non représentés spécifiquement) permettant de déplacer le curseur de manière à l'amener sur un objet sensible afin de le désigner. Lorsqu'un tel objet sensible est désigné, il est mis en valeur, en particulier par un changement d'apparence tel qu'un changement de couleur ou une surbrillance. L'exécution d'une fonction associée à un objet sensible est déclenchée par la validation de cet objet sensible préalablement désigné. Par conséquent, lesdits moyens de commande de curseur comportent, par exemple :
- un moyen de déplacement actionnable, de préférence sous forme d'une boule de commande ou souris sphérique, qui est susceptible de déplacer le curseur sur l'écran de visualisation 8 de manière à désigner un objet sensible ; et
- un moyen de validation actionnable, par exemple une touche, qui est susceptible de valider un objet sensible qui est désigné par ledit curseur de manière à faire exécuter la fonction qui est associée audit objet sensible.

Dans le présent cas, l'écran de visualisation 8 comporte au moins un objet sensible relatif au point de décision 5. La sélection de cet objet sensible (désignation et validation) donne accès à un menu listant les actions possibles à ce point de décision 5. Ce menu est contextualisé en fonction des propriétés du point de décision 5. En particulier, pour ledit point de décision 5, une commande "activer la trajectoire optionnelle" est rendue disponible. Ledit moyen de commande au curseur permet donc d'activer cette commande en désignant et en validant cet objet sensible.

Ce mode de réalisation préféré qui permet une activation simplifiée, utilise des moyens de commande interactifs modernes et très performants.

Dans un mode de réalisation préféré, le dispositif 1 conforme à l'invention fait partie d'un système de guidage automatique SG embarqué et représenté schématiquement sur la figure 5. Ledit système de guidage automatique SG qui fait suivre à l'aéronef A automatiquement une trajectoire de vol, notamment une trajectoire principale TP, comporte de façon usuelle :
- un ensemble 24 de sources d'informations ;
- une source d'informations auxiliaire 23 susceptible de fournir une trajectoire de vol pour l'aéronef A ;
- une unité centrale 25 qui est reliée par une liaison 26A audit ensemble 24 et par une liaison 26B à ladite source d'informations auxiliaire 23, et qui a pour objet de déterminer automatiquement, à l'aide d'informations reçues dudit ensemble 24 de sources d'informations et d'une trajectoire de vol courante fournie par ladite source d'informations auxiliaire 23, des ordres de pilotage de l'aéronef A permettant à ce dernier de suivre ladite trajectoire de vol courante ; et
- des moyens d'actionnement 27 d'organes commandés 28 (gouverne, ...) de l'aéronef A, auxquels sont appliqués automatiquement par une liaison 29 les ordres de pilotage déterminés par ladite unité centrale 25.

Selon l'invention, ladite source d'informations auxiliaire 23 comporte le dispositif 1 précité et conforme à l'invention, pour fournir une trajectoire de vol courante (à savoir soit une trajectoire principale TP, soit une trajectoire optionnelle TO après son activation), ladite liaison 26B pouvant comporter (ou correspondre à) la liaison 11 de la figure 1.

## Revendications

1. Procédé pour fournir une trajectoire de vol à un aéronef (A), procédé selon lequel :
a) on définit une trajectoire principale (TP) qui comprend des points de route et qui est suivie par l'aéronef (A), et au moins une trajectoire optionnelle (TO) qui s'écarte de ladite trajectoire principale (TP), qui présente au moins un point commun (TC) avec ladite trajectoire principale (TP) et qui est susceptible d'être suivie par l'aéronef (A) ;
b) on détermine un point de décision (5) qui indique la dernière position de l'aéronef (A) le long de ladite trajectoire principale (TP), où ladite trajectoire optionnelle (TO) peut encore être activée afin de permettre à l'aéronef (A) de la suivre ; et
c) on présente automatiquement ledit point de décision (5) à un pilote de l'aéronef (A),
**caractérisé en ce que :**
- à l'étape b) on détermine automatiquement ledit point de décision (5), en réalisant les opérations suivantes :
• à partir dudit point commun, successivement, pour chaque point de route suivant de ladite trajectoire principale (TP), dans le sens de vol de l'aéronef (A), on vérifie si ce point appartient également à ladite trajectoire optionnelle (TO) ; et
• dès qu'un point n'appartient plus à ladite trajectoire optionnelle (TO), on prend en compte le point précédent qui appartenait encore à ladite trajectoire optionnelle (TO) et on considère ce point précédent comme point de décision (5) ; et
- à une étape d) le pilote peut, au moins en fonction de cette présentation, activer ladite trajectoire optionnelle (TO) de sorte que l'aéronef (A) prend alors en compte cette trajectoire optionnelle (TO) à la place de ladite trajectoire principale (TP).

2. Procédé selon la revendication 1,
**caractérisé en ce que** l'on vérifie, dans un plan horizontal, si un point de la trajectoire principale (TP) appartient également à la trajectoire optionnelle (TO).

3. Procédé selon la revendication 1,
**caractérisé en ce que** l'on vérifie, dans tout l'espace, si un point de la trajectoire principale (TP) appartient également à la trajectoire optionnelle (TO).

4. Procédé selon l'une quelconque des revendications précédentes,
**caractérisé en ce que**, si à l'étape d) le pilote active ladite trajectoire optionnelle (TO) qui devient alors la nouvelle trajectoire suivie par l'aéronef (A), on transforme la trajectoire principale (TP) initialement suivie par l'aéronef (A) en nouvelle trajectoire optionnelle.

5. Dispositif pour fournir une trajectoire de vol à un aéronef (A), ledit dispositif comportant :
- des premiers moyens (2) pour définir une trajectoire principale (TP), qui comprend des points de route et qui est suivie par L'aéronef (A), et au moins une trajectoire optionnelle (TO) qui s'écarte de ladite trajectoire principale (TP), qui présente au moins un point commun (TC) avec ladite trajectoire principale (TP) et qui est susceptible d'être suivie par l'aéronef (A) ;
- des deuxièmes moyens (3) pour déterminer un point de décision (5) qui indique la dernière position de l'aéronef (A) le long de ladite trajectoire principale (TO), où ladite trajectoire optionnelle (TO) peut encore être activée afin de permettre à l'aéronef (A) de la suivre ; et
- des troisièmes moyens (6) pour présenter automatiquement ledit point de décision (5) à un pilote de l'aéronef (A),
**caractérisé en ce que :**
- lesdits deuxièmes moyens (3) qui déterminent automatiquement ledit point de décision (5) comportent :
• des moyens pour vérifier, à partir dudit point commun, successivement, pour chaque point de route suivant de ladite trajectoire principale (TP), dans le sens de vol de l'aéronef (A), si ce point appartient également à ladite trajectoire optionnelle (TO) ; et
• des moyens pour prendre en compte, dès qu'un point n'appartient plus à ladite trajectoire optionnelle (TO), le point précédent qui appartenait encore à ladite trajectoire optionnelle (TO), ce point précédent étant considéré comme point de décision (5) ; et
- ledit dispositif (1) comporte, de plus, des quatrièmes moyens (9) actionnables, permettant à un pilote d'activer ladite trajectoire optionnelle (TO) de sorte que l'aéronef (A) prend alors en compte cette trajectoire optionnelle (TO) à la place de ladite trajectoire principale (TP).

6. Dispositif selon la revendication 5,
**caractérisé en ce que** lesdits troisièmes moyens (6) comportent un écran de visualisation (8) tête haute.

7. Dispositif selon l'une quelconque des revendications 5 et 6,
**caractérisé en ce que** lesdits troisièmes moyens (6) comportent un écran de visualisation (8) tête basse.

8. Dispositif selon l'une quelconque des revendications 5 à 7,
**caractérisé en ce que** lesdits quatrièmes moyens (9) comportent des moyens de commande interactifs.

9. Système de guidage automatique d'un aéronef (A), ledit système de guidage (SG) comportant :
- un ensemble (24) de sources d'informations ;
- une source d'informations auxiliaire (23) susceptible de fournir une trajectoire de vol ;
- une unité centrale (25) pour déterminer automatiquement des ordres de pilotage de l'aéronef (A), à l'aide d'informations reçues dudit ensemble (24) de sources d'informations et d'une trajectoire de vol (TP, TO) fournie par ladite source d'informations auxiliaire (23) ; et
- des moyens d'actionnement (27) d'organes commandés (28) de l'aéronef (A), auxquels sont appliqués automatiquement les ordres de pilotage déterminés par ladite unité centrale (25),
**caractérisé en ce que** ladite source d'informations auxiliaire (23) comporte un dispositif (1) tel que celui spécifié sous l'une quelconque des revendications 5 à 8, pour fournir une trajectoire de vol (TP, TO).

10. Aéronef,
**caractérisé en ce qu**'il comporte un système de guidage (SG) tel que celui spécifié sous la revendication 9.

## Claims

1. A method for providing an aircraft (A) with a flight trajectory, method according to which:
a) a main trajectory (TP) which includes waypoints and which is followed by the aircraft (A), and at least one optional trajectory (TO) which deviates from said main trajectory (TP), which exhibits at least one common point (TC) shared with said main trajectory (TP) and which is able to be followed by the aircraft (A) are defined;
b) a decision point (5) which indicates the last position of the aircraft (A) along said main trajectory (TP), where said optional trajectory (TO) can still be activated so as to allow the aircraft (A) to follow it is determined ; and
c) said decision point (5) is presented automatically to a pilot of the aircraft (A),
**Characterized in that:**
- in step b), said decision point (5) is determined automatically, **in that**:
• on the basis of said common point, successively, for each point following said main trajectory (TP), in the direction of flight of the aircraft (A), a check is carried out to verify whether this point also belongs to said optional trajectory (TO); and
• as soon as a point no longer belongs to said optional trajectory (TO), account is taken of the previous point which still belonged to said optional trajectory (TO) and this previous point is regarded as decision point (5) ; and
- in a step d) the pilot can, at least as a function of this presentation, activate said optional trajectory (TO) in such a way that the aircraft (A) takes then account of this optional trajectory (TO) instead of said main trajectory (TP).

2. The method as claimed in claim 1,
**characterized in that** a check is carried out to verify, in a horizontal plane, whether a point of the main trajectory (TP) also belongs to the optional trajectory (TO).

3. The method as claimed in claim 1,
**characterized in that** a check is carried out to verify, in the whole of space, whether a point of the main trajectory (TP) also belongs to the optional trajectory (TO).

4. The method as claimed in any one of the preceding claims,
**characterized in that**, if in step d) the pilot activates said optional trajectory (TO) which then becomes the new trajectory followed by the aircraft (A), the main trajectory (TP) initially followed by the aircraft (A) is transformed into a new optional trajectory.

5. A device for providing an aircraft (A), with a flight trajectory,
said device comprising:
- first means (2) for defining a main trajectory (TP) which includes waypoints and which is followed by the aircraft (A), and at least one optional trajectory (TO) which deviates from said main trajectory (TP), which exhibits at least one common point (TC) shared with said main trajectory (TP) and which is able to be followed by the aircraft (A) ;
- second means (3) for determining a decision point (5) which indicates the last position of the aircraft (A) along said main trajectory (TO), where said optional trajectory (TO) can still be activated so as to allow the aircraft (A) to follow it; and
- third means (6) for automatically presenting said decision point (5) to a pilot of the aircraft (A),
**characterized in that**
- said second means (3) which automatically determine said decision point (5) include:
• means for carrying out a check on the basis of said common point, successively, for each point following said main trajectory (TP), in the direction of flight of the aircraft (A), to verify whether this point also belongs to said optional trajectory (TO) ; and
• means for taking account, as soon as a point no longer belongs to said optional trajectory (TO), of the previous point which still belonged to said optional trajectory (TO), this previous point being regarded as decision point (5); and
- said device (1) furthermore includes fourth means (9) which are actuatable, allowing a pilot to activate said optional trajectory (TO) in such a way that the aircraft (A) takes then account of this optional trajectory (TO) instead of said main trajectory (TP).

6. The device as claimed in claim 5,
**characterized in that** said third means (6) comprise a head-up display screen (8).

7. The device as claimed in any one of claims 5 and 6,
**characterized in that** said third means (6) comprise a head-down display screen (8).

8. The device as claimed in any one of claims 5 to 7,
**characterized in that** said fourth means (9) comprise interactive means of control.

9. An automatic guidance system for an aircraft (A), said guidance system (SG) comprising:
- a set (24) of information sources;
- an auxiliary source of information (23) able to provide a flight trajectory;
- a central unit (25) for automatically determining orders for steering the aircraft (A), with the aid of information received from said set (2) of information sources and a flight trajectory (TP, TO) provided by said auxiliary source of information (23); and
- means of actuation (27) of controlled members (28) of the aircraft (A), to which the steering orders determined by said central unit (25) are applied automatically,
**characterized in that** said central auxiliary source of information (23) comprises a device (1) such as that specified under any one of claims 5 to 8, for providing a flight trajectory (TP, TO).

10. An aircraft,
**characterized in that** it comprises a guidance system (SG) such as that specified under claim 9.

## Patentansprüche

1. Verfahren zum Bereitstellen einer Flugbahn für ein Flugzeug (A), in welchem:
a) definiert wird eine Hauptflugbahn (TP), die Routenpunkte umfasst und der das Flugzeug (A) folgt, und wenigstens eine optionale Flugbahn (TO), die von der Hauptflugbahn (TP) abweicht, die wenigstens einen gemeinsamen Punkt (TC) mit der Hauptflugbahn (TO) aufweist und der das Flugzeug (A) folgen kann;
b) bestimmt wird ein Entscheidungspunkt (5), der die letzte Position des Flugzeugs (A) entlang der Hauptflugbahn (TP) angibt, an welchem die optionale Flugbahn (TO) noch aktiviert werden kann, um dem Flugzeug (A) zu ermöglichen, dieser zu folgen; und
c) automatisch der Entscheidungspunkt (5) einem Piloten des Flugzeugs (A) präsentiert wird,
**dadurch gekennzeichnet, dass**:
- am Schritt b) automatisch der Entscheidungspunkt (5) bestimmt wird, indem die folgenden Operationen ausgeführt werden:
• ausgehend von dem gemeinsamen Punkt wird nacheinander für jeden Routenpunkt entlang der Hauptflugbahn (TP) in Flugrichtung des Flugzeugs (A) verifiziert, ob dieser Punkt auch zu der optionalen Flugbahn (TO) gehört;
• sobald ein Punkt nicht mehr zu der optionalen Flugbahn (TO) gehört, wird der vorher gehende Punkt berücksichtigt, der noch zu der optionalen Flugbahn (TO) gehörte und dieser vorher gehende Punkt wird als Entscheidungspunkt (5) angesehen; und
- am Schritt d) der Pilot wenigstens in Abhängigkeit von dieser Präsentation die optionale Flugbahn (TO) derart aktivieren kann, dass das Flugzeug (A) dann diese optionale Flugbahn (TO) anstelle der Hauptflugbahn (TP) berücksichtigt.

2. Verfahren nach Anspruch 1,
**dadurch gekennzeichnet, dass** in einer horizontalen Ebene verifiziert wird, ob ein Punkt der Hauptflugbahn (TP) auch zu der optionalen Flugbahn (TO) gehört.

3. Verfahren nach Anspruch 1
**dadurch gekennzeichnet, dass** im gesamten Raum verifiziert wird, ob ein Punkt der Hauptflugbahn (TP) auch zu der optionalen Flugbahn (TO) gehört.

4. Verfahren nach einem der vorstehenden Ansprüche,
**dadurch gekennzeichnet, dass**, wenn am Schritt d) der Pilot die optionale Flugbahn (TO) aktiviert, die dann die neue Flugbahn wird, der das Flugzeug (A) folgt, die Hauptflugbahn (TP), der das Flugzeug (A) anfänglich folgte, zur neuen optionalen Flugbahn transformiert wird.

5. Vorrichtung zur Bereitstellung einer Flugbahn für ein Flugzeug (A), wobei die Vorrichtung umfasst:
- erste Mittel (2), um zu definieren eine Hauptflugbahn (TP), die Routenpunkte umfasst und der das Flugzeug (A) folgt, und wenigstens eine optionale Flugbahn (TO), die von der Hauptflugbahn (TP) abweicht, die wenigstens einen gemeinsamen Punkt (TC) mit der Hauptflugbahn (TP) aufweist und der das Flugzeug (A) folgen kann;
- zweite Mittel (3), um einen Entscheidungspunkt (5) zu bestimmen, der die letzte Position des Flugzeugs (A) entlang der Hauptflugbahn (TO) angibt, an welchem die optionale Flugbahn (TO) noch aktiviert werden kann, um dem Flugzeug (A) zu ermöglichen, dieser zu folgen; und
- dritte Mittel (6), um automatisch den Entscheidungspunkt (5) einem Piloten des Flugzeugs (A) zu präsentieren,
**dadurch gekennzeichnet, dass**:
- die zweiten Mittel (3) die automatisch den Entscheidungspunkt (5) bestimmen, umfassen:
• Mittel, um ausgehend von dem gemeinsamen Punkt nacheinander für jeden Routenpunkt entlang der Hauptflugbahn (TP) in Flugrichtung des Flugzeugs (A) zu verifizieren, ob dieser Punkt auch zu der optionalen Flugbahn (TO) gehört; und
• Mittel, um, sobald ein Punkt nicht mehr zu der optionalen Flugbahn (TO) gehört, den vorher gehenden Punkt zu berücksichtigen, der noch zu der optionalen Flugbahn (TO) gehörte, wobei der vorher gehende Punkt als Entscheidungspunkt (5) angesehen wird;
- die Vorrichtung (1) femer betätigbare vierte Mittel (9) umfasst, die einem Piloten ermöglichen, die optionale Flugbahn (TO) derart zu aktivieren, dass das Flugzeug (A) dann diese optionale Flugbahn (TO) anstelle der Hauptflugbahn (TP) berücksichtigt.

6. Vorrichtung nach Anspruch 5,
**dadurch gekennzeichnet, dass** die dritten Mittel (6) einen Bildschirm (8) in Kopfhöhe umfassen.

7. Vorrichtung nach einem der Ansprüche 5 und 6,
**dadurch gekennzeichnet, dass** die dritten Mittel (6) einen Bildschirm (8) unterhalb der Kopfhöhe umfassen.

8. Vorrichtung nach einem der Ansprüche 5 bis 7,
**dadurch gekennzeichnet, dass** die vierten Mittel (9) interaktive Steuerelemente umfassen.

9. Automatisches Führungssystem für Flugzeug (A), wobei das Führungssystem (SG) umfasst:
- eine Gruppe (24) von Informationsquellen;
- eine Hilfs-Informationsquelle (23), die eine Flugbahn liefern kann;
- eine Zentraleinheit (25), um automatisch mit Hilfe der von der Gruppe (24) von Informationsquellen und einem Flug durch die Hilfs-Informationsquelle (23) gelieferten Flugbahn (TP, TO) erhaltenen Informationen Steuerbefehle für das Flugzeug (A) zu bestimmen; und
- Betätigungsmittel (27) von Steuergliedem (28) des Flugzeugs (A), an welchen automatisch die durch die Zentraleinheit (25) bestimmten Steuerbefehle angewendet werden,
**dadurch gekennzeichnet, dass** die Hilfs-Informationsquelle (23) eine Vorrichtung (1) umfasst, wie sie in einem der Ansprüche 5 bis 8 angegeben ist, um eine Flugbahn (TP, TO) bereit zu stellen.

10. Flugzeug,
**dadurch gekennzeichnet, dass** dieses ein Führungssystem (SG) umfasst, wie es in Anspruch 9 angegeben ist.
